# EUROPEAN PATENT APPLICATION

(11) **EP 2 541 366 A1**
(43) Date of publication of application: **02.01.2013**
(21) Application number: 11171729.4
(22) Date of filing: 28.06.2011
(51) Int. Cl.: G06F 1/16

(54) **Automatic docking base for connecting external connectors of digital device**

(71) Applicant: Wang, Leao, Taichung Hsien 411 (TW)
(72) Inventor: Wang, Leao, Taichung Hsien 411 (TW)
(74) Representative: 2K Patentanwälte Blasberg Kewitz & Reichel

(57) **Abstract**

There is disclosed an automatic docking base (10) for connecting external connectors of a digital device (50) comprising a base (20), an elevating deck (30) with a position limit wall and a slide rod (40) with a plug fixed to an end of the slide rod, and the elevating deck (30) is pivotally coupled to an inwardly concave the retaining slot of the base (20) by a coupling shaft and a corresponding lug, and the effect of an elastic element is used for defining a tilt-up state, and the slide rod (40) is pivotally coupled to a corresponding guide block (25) at the bottom of the base, and a plug (41) at the front end of the slide rod is extended into the plug slide of the elevating deck (30) precisely. The guide block (25) further has an arc guide slot, such that the slide rod can be slid up and down in the guide slot. When the digital device is placed at the elevating deck (30) and pressed towards the retaining slot of the base (20) to a flattened position, the link relation drives the plug to move towards a connection slot of the digital device to complete an automatic connection.

## Description

### BACKGROUND OF THE INVENTION

### FIELDS OF THE INVENTION

The present invention relates to an automatic docking base for connecting external connectors of a digital device, and more particularly to a docking base for carrying a digital device and connecting the digital device with a power transmission line automatically.

### DESCRIPTION OF THE RELATED ART

As we all know, all portable digital devices (such as mobile phones, digital music players, personal digital assistants (PDAs), e-books, digital photo frames, notebook computers, and tablet PCs) adopt an external transmission line (such as a general slot, a USB slot, a multi-port slot, a 1394 slot, and various other slots) for a system-to-system or system-to-power connection to execute an expected data transmission, software program, electric charging, or related operation, and the system slots and transmission plug used for connecting one another are generally defined as external connectors.

Although the external connectors have been used for years, and users get used to this operating mode already, long-time observations and verifications show that the slot of a connector of a digital device is the most easily damaged part due to poor manufacturing quality of the digital device (including software and hardware), improper operation or use of the digital device, or external environment. The slot of the connector may be damaged by improper pulling, hitting, and forcing a plug or unplug without aligning the connector precisely. Therefore, the service life is shortened and the maintenance and repair are more troublesome and inconvenient.

According to the invention, n automatic docking base for connecting external connectors of a digital device comprises a base, an elevating deck with a position limit wall and a slide rod with a plug fixed to an end of the slide rod, and the elevating deck is pivotally coupled to an inwardly concave the retaining slot of the base by a coupling shaft and a corresponding lug, and the effect of an elastic element is used for defining a tilt-up state, and the slide rod is pivotally coupled to a corresponding guide block at the bottom of the base, and a plug at the front end of the slide rod is extended into the plug slide of the elevating deck precisely. The guide block further has an arc guide slot, such that the slide rod can be slid up and down in the guide slot. When the digital device is placed at the elevating deck and pressed towards the retaining slot of the base to a flattened position, the link relation drives the plug to move towards a connection slot of the digital device to complete an automatic connection.

### SUMMARY OF THE INVENTION

In view of the aforementioned shortcomings, the inventor of the present invention based on years of experience in the related industry to conduct extensive researches and experiments, and finally developed a docking base in accordance with the present invention to overcome the shortcomings of the prior art.

Therefore, it is a primary objective of the present invention to provide a positioning design for users to place a digital device at a fixed position, and connect or separate the digital device by a simple press-down or lift-up movement, and the invention can overcome the shortcomings of the conventional docking base and improve the service life of the connector significantly.

### BRIEF DESCRIPTION OF THE DRAWINGS

The accomplishment of this and other objects of the invention will become apparent from the following description and its accompanying drawings of which:
- FIG. 1: is an exploded view of one embodiment of the invention;
- FIG. 2: is a perspective view of the embodiment of FIG. 1;
- FIG. 3: is a schematic view of using the embodiment of FIG. 1;
- FIG. 4: is a partial side view of the embodiment of FIG. 2;
- FIG. 5: is a schematic view of operating the embodiment of FIG. 3;
- FIG. 6: is a partial side view of another embodiment of the invention;
- FIG. 7: is a schematic view of operating the embodiment of FIG. 6; and
- FIG. 8: is a schematic view of an application in accordance with a preferred embodiment of the present invention.

### DETAILED DESCRIPTION OF THE PREFERRED EMBODIMENT

The technical measures, structural characteristics of the present invention will become apparent with the detailed description of preferred embodiments accompanied with related drawings as follows:
It is noteworthy to point out that various digital devices may come with different shapes, sizes and unique structural layouts, so that related components and layouts of the present invention can be modified and designed accordingly to meet the corresponding requirements of various digital devices.

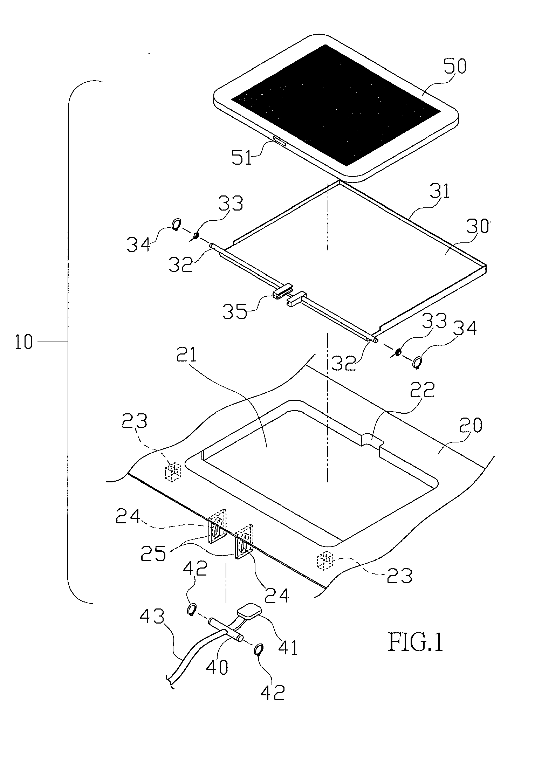

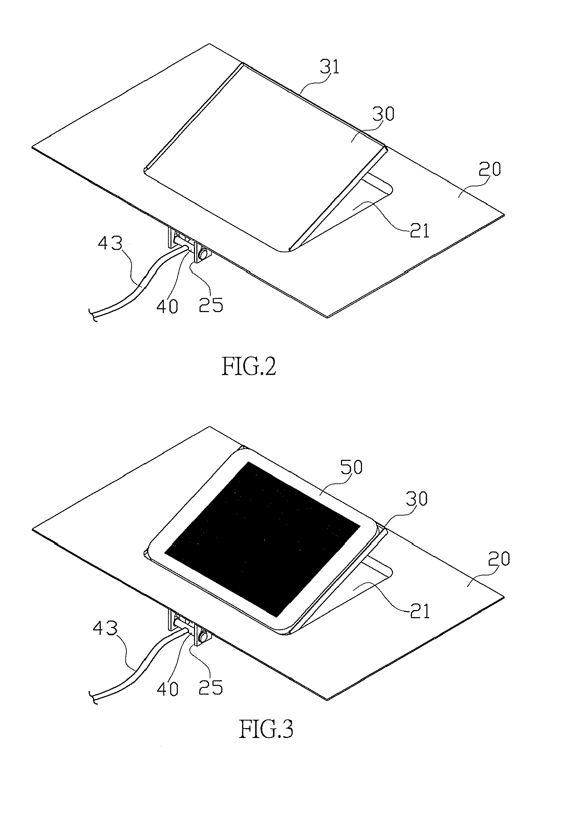

With reference to FIGS. 1 to 3 for a preferred embodiment of the present invention, an automatic docking base 10 of the present invention comprises:
a base 20, substantially in the shape of a slab, and installed at any device or on any plane (not shown in the figures) according to actual using requirements, and having an inwardly concave retaining slot 21 formed at a distal surface of the base 20, a notch 22 formed at an appropriate position of the retaining slot 21, and a lug 23 formed at the bottom of the base 20 and a corresponding guide block 25 with an arc guide slot 24;
an elevating deck 30 having a position limit wall 31, a coupling shaft 32 installed at a position opposite to the lug 23 of the base 20, and pivotally coupled to the retaining slot 21 of the base 20 and operated in concern with an elastic element 33 and a first retaining ring 34, such that the effect of the elastic element 33 can be used for setting the elevating deck 30 in a tilt-up state, and a plug slide 35 installed at a position opposite to the guide block 25 of the base 20; and
a slide rod 40, having a plug 41 fixed at an end of the slide rod 40, and pivotally coupled to a corresponding position of the guide block 25 of the base 20 in concern with a second retaining ring 42, such that the plug 41 can be extended into the plug slide 35 of the elevating deck 30 precisely, and the slide rod 40 can slide up and down in the guide slot 24, and the plug 41 being integrated with the docking base 10 with a power cable 43 as a piece.

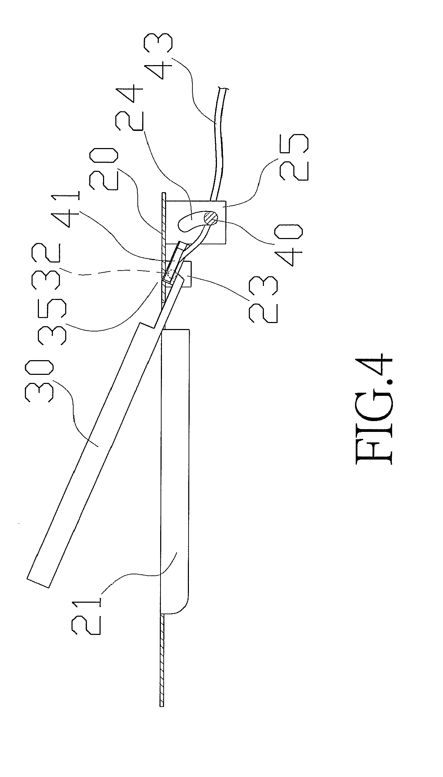

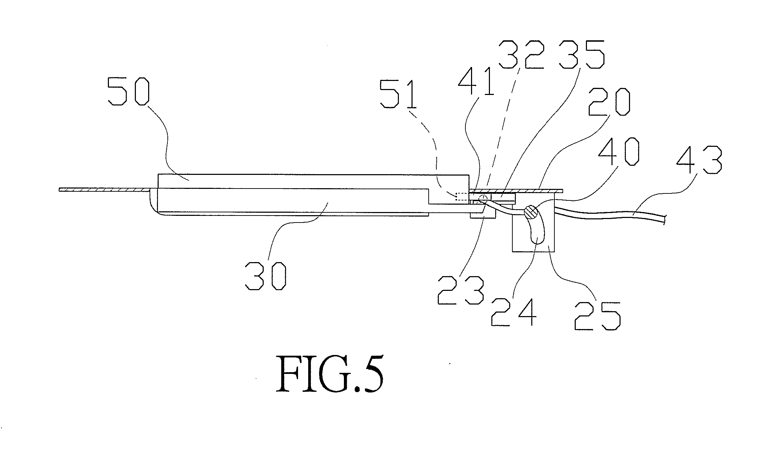

With reference to FIGS. 4 and 5, the elevating deck 30 of the docking base 10 comprised of the aforementioned components normally tilts up and extends out from the of the retaining slot 21 of the base 20, while the plug 41 is retracted in the slide 35 at a standby state. After the digital device 50 is placed on the elevating deck 30 and pressed towards the retaining slot 21 of the base 20 to a flattened position, the slide rod 40 is linked and displaced to the top of the guide slot 24, such that the plug 41 extends out from a connection slot 51 of the digital device 50 to achieve an automatic connection. On the other hand, the elevating deck 30 can be lifted up through the action of the notch 22 to disconnect the digital device 50. Now, the slide rod 40 is displaced in a reverse direction by the corresponding linking relation, and the elastic element 33 will assist tilting up the elevating deck 30 timely, such that the plug 41 is retracted and separated from the connection slot 51 automatically to resume its original standby state.

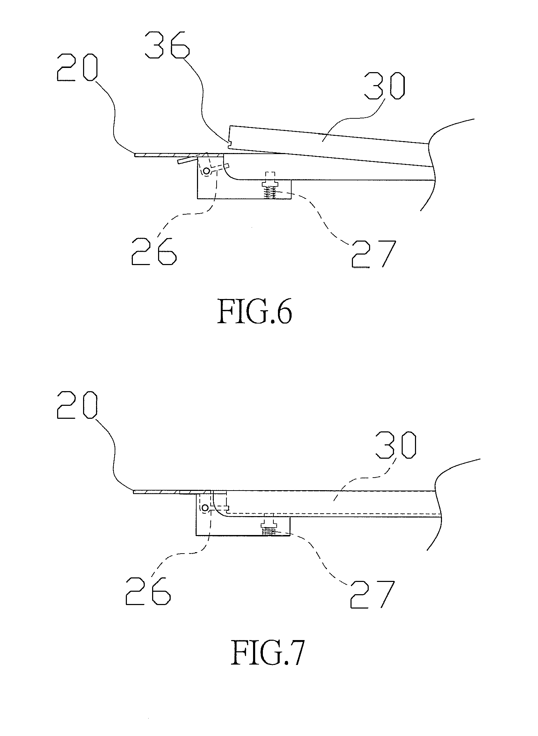

With reference to FIGS. 6 and 7 for the second preferred embodiment of the invention, an inwardly concave embedding hole 36 can be formed at an appropriate position of the elevating deck 30 and corresponding to a latch embedding component 26 installed at the base 20, such that the elevating deck 30 and the base 20 can be connected securely to prevent the elevating deck 30 from being tilted up accidentally. Meanwhile, the elastic lifting component 27 installed at the bottom of the base 20 is capable of providing the effect of tilting up the elevating deck 30.

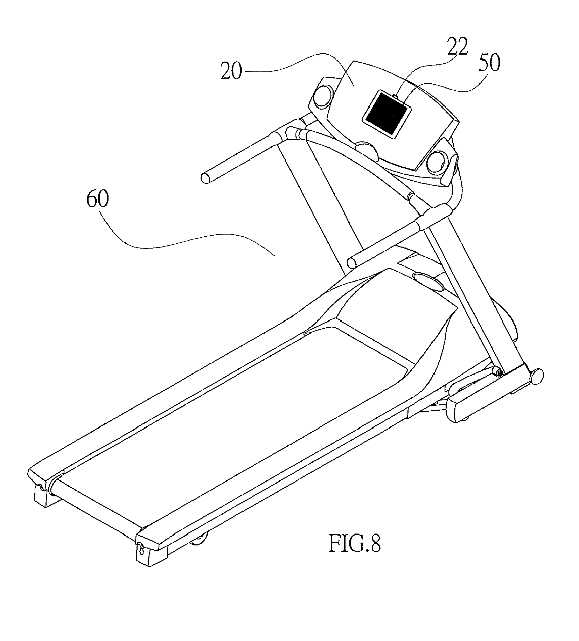

With reference to FIG. 8 for the preferred embodiment of applying the present invention to an electric treadmill 60, the digital device 50 is used as a device for controlling and operating the electric treadmill 60 and designed according to the present invention to control and operate the electric treadmill 60 as well as charging the digital device 50, such that the digital device 50 has sufficient power after being removed from the docking base.

In summary there is disclosed an automatic docking base 10 for connecting external connectors of a digital device 50 comprising a base 20, an elevating deck 30 with a position limit wall and a slide rod 40 with a plug fixed to an end of the slide rod, and the elevating deck 30 is pivotally coupled to an inwardly concave the retaining slot of the base 20 by a coupling shaft and a corresponding lug, and the effect of an elastic element is used for defining a tilt-up state, and the slide rod 40 is pivotally coupled to a corresponding guide block 25 at the bottom of the base, and a plug 41 at the front end of the slide rod is extended into the plug slide of the elevating deck 30 precisely. The guide block 25 further has an arc guide slot, such that the slide rod can be slid up and down in the guide slot. When the digital device is placed at the elevating deck 30 and pressed towards the retaining slot of the base 20 to a flattened position, the link relation drives the plug to move towards a connection slot of the digital device to complete an automatic connection.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. An automatic docking base (10) for connecting external connectors of a digital device (50), comprising:
a base (20), substantially in the shape of a slab, and having an inwardly concave retaining slot (21) formed at a distal surface of the base, a notch (22) formed at an appropriate position of the retaining slot, a lug (23) formed at the bottom of the base and a corresponding guide block (25) having an arc guide slot (24);
an elevating deck (30) having a position limit wall (31), a coupling shaft (32) installed at a position opposite to the lug of the base, and pivotally coupled to the retaining slot of the base and operated in concern with an elastic element (33) and a first retaining ring (34), such that the effect of the elastic element can be used for setting the elevating deck (30) in a tilt-up state, and a plug slide installed at a position opposite to the guide block (25) of the base; and
a slide rod (40), having a plug (41) fixed at an end of the slide rod, and pivotally coupled to a corresponding position of the guide block (25) of the base in concern with a second retaining ring (42), such that the plug can be extended into the plug slide of the elevating deck (30) precisely, and the slide rod (40) can slide up and down in the guide slot, and the plug being integrated with the docking base with a power cable as a piece;
thereby the elevating deck (30) of the docking base comprised of the aforementioned components normally tilts up and extends out from the of the retaining slot of the base (20), while the plug (41) is retracted in the slide at a standby state; and after the digital device (50) is placed on the elevating deck (30) and pressed towards the retaining slot of the base to a flattened position, the slide rod (40) is linked and displaced to the top of the guide slot, such that the plug (41) extends out from a connection slot (51) of the digital device (50) to achieve an automatic connection; and on the other hand, the elevating deck (30) can be lifted up through the action of the notch (22) to disconnect the digital device, wherein the slide rod (40) is displaced in a reverse direction by the corresponding linking relation, and the elastic element (33) will assist tilting up the elevating deck (30) timely, such that the plug (41) is retracted and separated from the connection slot (51) automatically to resume its original standby state.
